# EUROPEAN PATENT SPECIFICATION

(11) **EP 1 383 284 B1**
(45) Date of publication and mention of the grant of the patent: **26.01.2005**
(21) Application number: 02360213.9
(22) Date of filing: 17.07.2002
(51) Int. Cl.: H04L 12/56

(54) **Method, computer software products, client terminal and network for efficient use of network resources by just-in-time modulation of quality of service based on service usage and user behavior**
Verfahren, Rechnerprogramm, Kundenendgerät und Netzwerk für die effiziente Benutzung von Netzwerkmittel durch die "just-in-time" Anpassung des Dienstqualitätes basiert auf die Benutzung des Dienstes und das Verhalten des Benutzers
Procédé, programme informatique ,terminal client, et réseau pour l'usage efficace des ressources d'un réseau par la modulation en flux tendus de la qualité de service basée sur l'usage du service et le comportement des utilis

(43) Date of publication of application: 21.01.2004
(73) Proprietor: ALCATEL, 75008 Paris (FR)
(72) Inventor: Trappeniers, Lieven, 2200 Herentals (Noorderwijk) (BE); Godon, Marc, 1840 Londerzeel (BE)
(74) Representative: Brose, Gerhard

(56) References cited:
- EP-A- 0 883 075
- EP-A- 1 021 015
- EP-A- 1 158 740
- EP-A- 1 202 528
- WO-A-01/50278
- WO-A-99/44335
- HONG J W-K ET AL: "A CORBA-BASED QUALITY OF SERVICE MANAGEMENT FRAMEWORK FOR DISTRIBUTED MULTIMEDIA SERVICES AND APPLICATIONS" IEEE NETWORK, IEEE INC. NEW YORK, US, vol. 13, no. 2, March 1999 (1999-03), pages 70-79, XP000875023 ISSN: 0890-8044

## Description

### BACKGROUND OF THE INVENTION

### Field of the Invention

The present invention relates to modulation of quality of service (QoS) in access networks.

### Background

Many sophisticated emerging applications, such as video streams, multimedia conferencing, or distributed virtual reality deploy in todays internetworking infrastructure. The main due requirement that all these applications share is the need for (guaranteed) quality of service (QoS) such as high bandwidth, delay, and jitter delay etc.

The ITU-T E.800 (08/94) recommendation introduces into the QoS concept on page 1 to 4 and defines there areas that affect the QoS. This recommendation describes factors that contribute collectively to the overall quality of service as perceived by the user of a telecommunication service. The users degree of satisfaction of the quality of service can be divided into service performance areas like support, operability, serveability, and security. It defines QoS as the collective effect of service performance which determine the degree of satisfaction of a user of the service.

Service providers that offer services with a guaranteed quality require management systems that can retrieve, calculate and present QoS data from the four performance areas. These management systems have to control the Service Level Agreements (SLA), between the consumers and the provider, and react on service quality violations according to business rules. Today there exist products to manage this, but no standards or de-facto standards exist to facilitate the integration of a QoS management system with other management systems such as mediation, billing and service activation as part of a total management solution.

The QoS requirements are typically specified in terms of bounds, e.g., the worst case end-to-end delay or the maximum bandwidth. Other parameters may be specified as well.

On the other hand the networks have limited resources with respect to quality of service. The resources are shared between consumers.

Today the resources are allocated mainly statically by consumers, e.g. according to a business model. There are colored services (gold, silver, bronze) available, where per connection at connection set-up a static type of QoS is chosen. From telephony an optimization is known, minimizing cost by choosing a subscription-type (provider), e.g., by a call-by-call prefix or user-preferences, at subscription time. Another example is the subscription-type (billing) to user-preferences in mobile communication. There is no cost reduction and no change of QoS at this moment, only billing is adapted while QoS remains.

This QoS management is of rather static type, configured administratively at subscription time. Changing the QoS and price of the subscription is an administrative task. The granularity of this approach is limited to the connection-setup, rather than the requirements of applications that use them.

This prior-art has some major disadvantages. It does not take into account the cost for operator. Effectively no change of QoS, only billing is adapted while QoS remains the same. The approaches are limited to with respect to change. Typically a user can change subscription mode 2 or 3 times. And the granularity is limited to a connection, instead of services or finer granularity. The QoS adaptation is triggered by user, based on match between preferences and behavior of the service. The user has to make the matching judgement himself.

Especially todays broadband access networks lack of dynamic subscription types. There are static subscription types dealing with the connection as a whole. Typically, at subscription-time, the user chooses a type gold versus bronze and this type is not changed thereafter. If the user wants to use demanding services, he or she will have to change his or her entire connectivity subscription impacting all services and all family members.

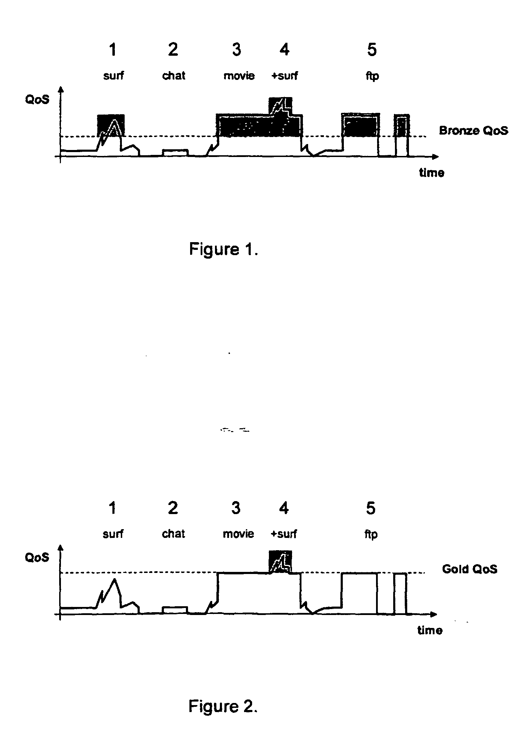

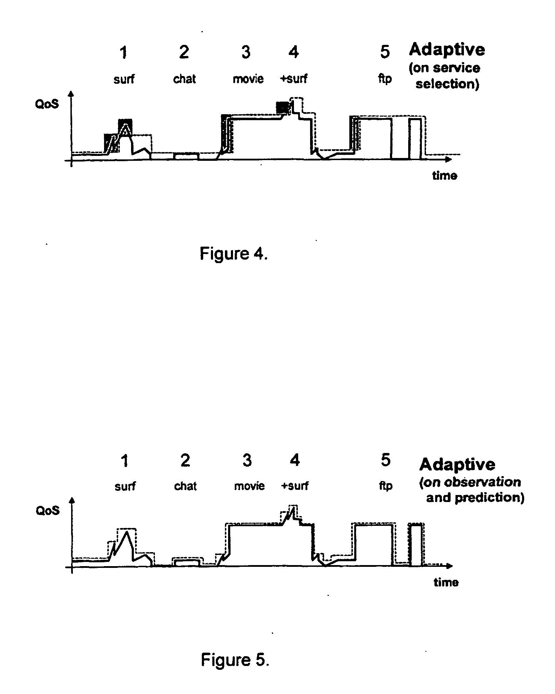

Figure 1 up to Figure 5 explaining the current problems and the proposed solution. For a gold service, the end-user will pay a lot of money to have, e.g. a high bandwidth available at all times, satisfying most of his needs. Although the operator will have significant revenues, he will have to provision a lot of unused bandwidth.

For a bronze service, the end-user will have a cheap subscription that will limit the networking performance. An upgrade from bronze to gold will be expensive and will be a time-consuming administrative task.

Therefore it is necessary to provide a method for quality of service, e.g. bandwidth, allocation in an highly adaptive way.

Such a method for allocation of bandwidth is in a predictive fashion is known from the international patent application WO 99/44335. There pockets are identified with particular data streams and characteristics of the data streams are used to predict probable future bandwidth requirements. Such predictions are used to allocate high-bandwidth channels and to close or switch channels as in accordance with predicted needs. Preferably the system is self-learning and can modify a rules base for making allocation decisions e.g. based on actual use statistics.

The European Patent EP 1 202 528 describes a development in the direction from a user's perspective instead of the technical view in terms of bandwidth, namely a browser-based monitoring system and method. A browser operable with a user's Internet-compliant device is provided for launching a transaction session, wherein a media-based parametric detector is associated with the browser in order to track a plurality of media-based parameters and metrics generated during the transaction session. The media-based parameters and metrics are effectuated at least in part due to the user's interaction with the browser with respect to the transaction session. A reporting structure is provided in association with the browser for reporting the media-based parameters and metrics to an Internet entity for effectuating an IP-based service.

The European Patent Application EP 1 158 740 relates to framework for achieving cross-adaptability by providing components for QoS management in the communication network(s) by means of a component coordinator unit and targets the uniformity problem.

The European Patent Application EP 1 021 015 discloses a network-device control system for controlling a network device by acquires user priority or application priority and, controlling accordance with the priority.

The article ,A CORBA-BASED QUALITY OF SERVICE MANAGEMENT FRAMEWORK FOR DISTRIBUTED MULTIMEDIA SERVICES AND APPLICATIONS' IEEE NETWORK, IEEE INC. NEW YORK, US, vol. 13, no. 2, March 1999 (1 999-03), pages 70-79, XP000875023 ISSN:0890-8044 addressed issues of QoS management services in distributed multimedia services and applications. The article provides an end-to-end QoS management called the QoS management framework. A key component of this framework is the QoS Management Service Object, which orchestrates resources at endpoints, coordinating resource management across layer bouridaries. Services such as translation, monitoring, admission, and negotiation are provided by the QoS Management Service Object allowing dynamic negotiation and renegoation of QoS by users.

A further method and apparatus for a variable bandwith experience for an end-user is described in the international patent application WO 01/50278.

It is a problem to provide network resources uniformly in terms of the above mentioned QoS efficiently in order to satisfy the real demand of customer's, i.e. from a user's perspective instead of the technical view in terms of bandwidth, as good as possible. In order to solve this situation one has to schedule the network resources, i.e. the QoS, with respect to the requests and expectations of the users'.

This problem is solved by a method for allocating network resources by just-in-time modulation of quality of service, QoS comprising steps of
- recording QoS demands (16),
- predicting required QoS demands,
- deriving and propagating QoS demands (16) and grants (14), and
- coordinating QoS demands (16) of a manifold of users, the method further comprising the steps of
- recording a click stream preceding a demand for bandwidth at a client terminal of a user as user-behavior that triggers the real-time adaptation or modulation of the QoS settings (15) at a terminal,
- generating QoS user profile (13) comprising an event log reflecting resource requests and a synthesis of user-behavior at the terminal,
- predicting required QoS demand (16) based on current user behavior and QoS user profile (13) by a trained predicting component minimizing the prediction versus user correction error-rate at the terminal,
- evaluating QoS demands (16) and balancing QoS grants for deriving and propagating QoS grants (14),
- coordinating QoS demands (16) of a manifold of users, based on predicted and required QoS demand (16), QoS user profiles (13), QoS user preferences (11), and available resources (15) by a scheduling server.

The invention comprises observing resource requests and user behavior and deriving QoS demands and scheduling the network's resources in terms of QoS, accordingly. A scheduler is modulating the QoS based on service usage and user-behavior just-in-time. Modulation, here, is a varying of QoS with respect to need of QoS. From now on the term adaptation of QoS is used for QoS modulation synonymical.

User behavior is recorded based on the individual event stream and a prediction of required resources, e.g. bandwidth, delay, etc. is performed. The resources are scheduled by the expected or predicted demand accordingly. The adaptation of the QoS might be based on an analysis of user-behavior and a synthesis stored, e.g. in a user's profile. The modification of QoS settings might be made transparent to the user. The user might be involved when increasing QoS, e.g. bandwidth temporarily, and possibly pay accordingly.

The invention comprises advantageous scheduling scenarios, where the modulated QoS is triggered by service selection, where the QoS is modulated predidively, and where QoS settings are transparent to the user, and where the user is involved interactively.

### OBJECTS AND ADVANTAGES OF THE INVENTION

The invention is the above described method.

The invention is also a telecommunication network comprising a client terminal and a scheduler server, said client terminal comprising
- recording means for recording quality of service, QoS demands (16),
- predicting means for predicting required QoS demands (16),
- requesting means for deriving and propagating QoS grants (14), and said scheduler server comprising
- evaluation and balancing means for evaluating QoS demands (16) and balancing QoS grants for deriving and propagating QoS grants (14), and
- coordinating means for coordinating QoS demands (16) of a manifold of users,
where the client terminal comprises further
- recording means for recording a click stream preceding a demand for bandwidth at a client terminal of a user as user-behavior that triggers the real-time adaptation or modulation of the QoS settings (15),
- processing means for generating QoS user profile (13) comprising an event log reflecting resource requests and a synthesis of user-behavior,
- prediction means for predicting (8, 10) required QoS demand based on current user behavior and QoS user profile (13) by a trained predicting component minimizing the prediction versus user correction error-rate, and the scheduler server comprises further
- coordinating means for coordinating QoS demands (16) of a manifold of users, based on predicted and required QoS demand (16), QoS user profiles (13), QoS user preferences (11), and available resources (15).

The invention is also a client terminal comprising
- recording means for recording quality of service, QoS demands,
- predicting means for predicting required QoS demands,
- requesting means for deriving and propagating QoS grants, and
where the client terminal comprises further
- recording means for recording a click stream preceding a demand for bandwidth at the client terminal as user-behavior that trigger the real-time adaptation or modulation of the QoS settings (15),
- processing means for generating QoS user profile (13) comprising an event log reflecting resource requests and a synthesis of user-behavior,
- prediction means for predicting required QoS demand (16) based on current user behavior and QoS user profile (13) by a trained predicting component minimizing the prediction versus user correction error-rate.

The invention is furthermore a corresponding computer software product. The invention realizes a scheduler for efficient use of network resources by just-in-time modulation of QoS based on service-usage and user-behavior comprising scheduling or dispatching means for evaluating and balancing, the QoS demands and propagating the QoS grants based on resource requests, QoS user profiles, QoS user preferences, and resource availability.

Further, the invention reolizes a network for efficient use of network resources by just-in-time modulation of QoS based on service-usage and user-behavior comprising at least one client terminal providing QoS demands, QoS-user-profiles, and QoS-user-preferences, at least one scheduling server providing QoS grants by evaluating, balancing QoS demands with QoS resources, and propagating the QoS demands, based on QoS user profile information and QoS user preferences, and network elements serving QoS grants and propagating QoS demands and QoS grants.

Accordingly, it is an object and advantage of the present invention adapting QoS based on a fine granularity simulate a high performant network. The adaptation reduce costs/effort for end-users and operators by using network resources efficiently.

Another advantage of the present invention is that the user has not to make the judgement about the QoS himself.

A further advantage of the present invention is that the proposed scenario has a finer granularity for QoS changes: services instead of connection, users instead of subscriber, real-time instead of only once, modulated instead of fixed.

Yet another advantage of the present invention is that end-users only pay a cheap subscription with an extra comfort service and receive a high quality user-experience, even with this moderate subscription. Operators can dimension their networks more accurately, while generating extra revenue streams from users that normally would take cheap subscriptions.

These and many other objects and advantages of the present invention will become apparent to those of ordinary skill in the art from a consideration of the drawings and ensuing description.

### BRIEF DESCRIPTION OF THE FIGURES

**Figure. 1** is a schematic diagram of a prior art illustrating the problem with a Bronze QoS
**Figure. 2** is a schematic diagram of a prior art illustrating the solution with a Gold QoS
**Figure. 3** is a schematic drawing showing a use case diagram (according to The Unified Modeling Language User Guide, Booch et. al., Addison Wesley, 1999, Chapter 17) of the relationship between interacting components managing QoS resources and demands according to the invention.
**Figure. 4** is a schematic diagram illustrating the invention where QoS is adaptive managed based on service selections.
**Figure. 5** is a schematic diagram illustrating the invention where QoS is adaptive managed based on observation of user behavior and prediction.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

**Figure. 1** shows a diagram where the x-axis is time and the y axis is QoS. The bold line is the user demand for QoS, and the dashed line is the available resource of a Bronze QoS.

The textured areas mark the situations whenever the demand of QoS is greater than the available resource of QoS. The picture shows a scenario where a user starts with surfing 'surf'1, where the available QoS is first exceeded, then the user chats in 'chat' 2 within the available QoS. After chatting the user starts a movie in 'movie' 3, highly exceeding the available QoS. Additionally the user surfs in '+surf' 4 while playing the movie. Last, the user starts a FTP session in 'ftp' 5, also exceeding the available QoS.

The picture illustrates the lack of QoS at certain burst situations. It also illustrates the wasted QoS resource in the intermediate intervals.

**Figure. 2** shows a diagram where the x-axis is time and the y axis is QoS. The bold line is the user demand for QoS, and the dashed line is the available resource of a Gold QoS.

The textured areas mark the situations whenever the demand of QoS is greater than the available resource of QoS. The picture shows a scenario where a user starts with surfing 'surf'1, where the available QoS is not exceeded, then the user chats in 'chat' 2 within the available QoS. After chatting the user starts a movie in 'movie' 3, not exceeding the available QoS. Only, when the user additionally starts surfing in '+surf' 4 while playing the movie, the available QoS is exceeded. Lost, the user starts a FTP session in 'ftp' 5, also not exceeding the available QoS.

The picture illustrates the resolved lack of QoS at certain burst situations as shown in figure 1. It also illustrates the heavily wasted QoS resource in the intermediate intervals

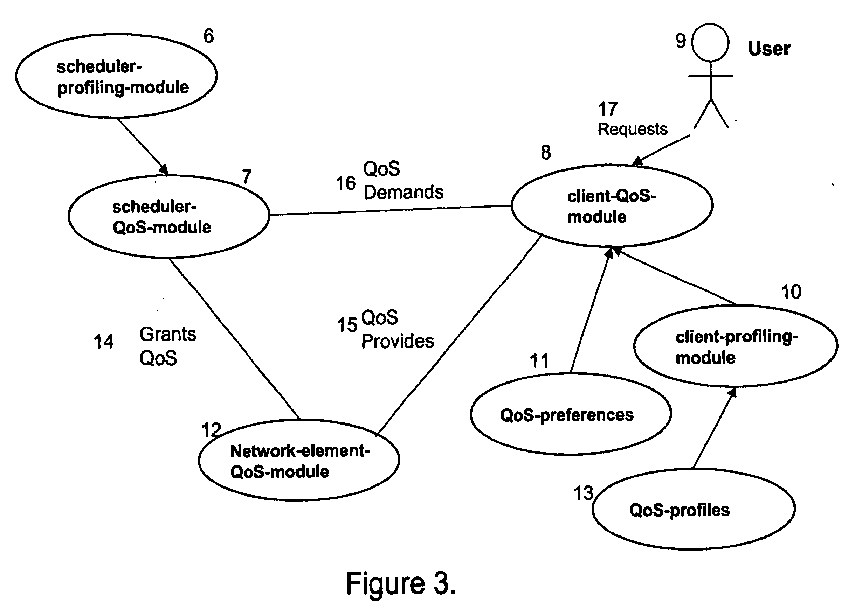

**Figure. 3** shows a use case diagram of the present invention. It contains a use case for the QoS scheduler 'scheduler-QoS-module' 7, a use case covering the client functionality 'client-QoS-module' 8, and a use case for network elements 'network-element-QoS-module' 12. The client use case 'client-QoS-module' 8 is refined into a controlling use case 'QoS-preferences' 11 and a profiling use case 'client-profiling-module' 10, itself refined be the use cases 'QoS-profiles' 13. The use case 'scheduler-QoS-module' 7 is also refined by a use case 'scheduler-profiling-module' 7 handling multiple users' behavior. The diagram further shows an actor (User) from now on called user.

The user has a certain QoS demand, expressed in reactivity or behavior observable e.g., as resource requests or a click-stream. The use case 'client-QoS-module' 8 has to cope with behavior and to derive required QoS demands. This might be done by recording the requests and deriving a QoS demand profile modeled by the use case 'client-profiling-module' 10 by generating QoS user profiles, handled in the use case 'QoS-profiles' 13. It is taken into account that a user has the possibility to control the demanding as well as the profiling by certain preferred strategies. Therefore the use case 'QoS-preferences' 11 is introduced.

At the network side a scheduler component is expressed by the use case 'scheduler-QoS-module' 7. It comprises a use case 'scheduler-profiling-module' 6, performing aggregations of multiple QoS user profiles as well as of availdble QoS resources. It relates to the use case 'client-QoS-module' 8 by 'QoS Demands' 16. The 'scheduler-QoS-module' 7 use case models the activity of scheduling QoS resources with respect to QoS demands. Thus it relates to use case 'network-element-QoS-module' 12. The relation is named 'Grants QoS'. The use case 'network-element-QoS-module' 12 has to provide the granted QoS to a client, accordingly, expressed by the relation 'Provides QoS' between the use case 'network-element-QoS-module' 12 and the use case 'client-QoS-module' 8.

The figure shows the general working principle of the invention. At clients' side demands are derived - at network elements' side a resources are available, and the available QoS has to be allocated (dispatched or scheduled) with respect to the demands.

**Figure. 4** shows a diagram where the x-axis is time and the y axis is QoS, as in figure 1 and figure2. The bold line is the user demand for QoS, and the dashed line is the available resource when the QoS is adapted based on service selection.

The textured areas mark the situations whenever the demand of QoS is greater than the available granted resource of QoS. It is assumed that enough QoS resources are available for the scenario. The picture shows the connection between the demanded necessary QoS and the granted QoS. If the demanded QoS exceeding the available QoS resources obviously a dispatching is necessary.

The picture shows a scenario where a user starts with surfing in 'surf' 1, where the available QoS is first exceeded and after an adaptation, the demand is satisfied. When the user-chats in 'chat' 2 the necessary QoS is available. After chatting the user starts a movie in 'movie' 3, the demand shortly is highly exceeding the available QoS. After the adaptation the demand is once more covered by the available QoS. When the user additionally surfs in '+surf' 4 while playing the movie the same situation occurs, first exceeding available QoS, then satisfying QoS demand. The same applies when the user starts a FTP session in 'ftp' 5.

The picture illustrates the effect of the invention: how QoS resources are saved and how QoS demands are satisfied by an service selection based just-in-time adaptation of available QoS.

**Figure. 5** shows a diagram where the x-axis is time and the y axis is QoS, as in figure 4 and figure2. The bold line is the user demand for QoS, and the dashed line is the available resource when the QoS is adapted based on observed user behavior and prediction of demand.

Here for the same user request profile as in figure 4. there is no QoS demand exceeding the available QoS. The picture illustrates the effect of just-in-time QoS adaptation based on observed user behavior and prediction: how perfectly the QoS resources are saved and how QoS demands perfectly are satisfied.

In a scenario where a modulated QoS is triggered, e.g., by service selection, the end-user will have a user-experience that is similar to the gold-subscription (see figure 2. and 4.). For the operator, this will result in a lower base-line of provisioned QoS, e.g. bandwidth, see figure 4. and 5.), with some extra bursts added. Moreover, the operator can be confident that the QoS demand will at all times map on the real needs of the end-users in contrast to the gold service. For the operator, the statistically averaged bursts combined with the accuracy of QoS demand will allow optimization of his network, both concerning design and cost. Therefore, such a service can be offered to the end-user at a more competitive price.

The scenario where the QoS is modulated predictively refines the above scenario in the sense that
- more situations (surpassing the classical notion of "application") can be taken into account.
- The base-line for QoS provisioning can be lowered even further
   o lower cost for the operator
   o more bursts in QoS demand allowing the operator to dimension his network more efficiently
- the change in QoS happens just before the service actually starts, resulting in optimal transparency (no delay at start of video for example) for the end-user.
- it is optimal with respect to user experience, even going beyond a gold service.

The QoS profiles can be constructed based on the individual click-stream of and events related to the user, with the behavior of the whole user-population as a reference. The technology for establishing such profiles is already available.

The events that trigger the real-time adaptation/modulation of the QoS settings can be based on the click-stream of the user, a sequence in this stream, the launch of local applications, accessing specific URL's, accessing URL's containing a certain pattern, accessing a specific server, DNS lookups, timed events (possibly derived from the profile), predictions from comparing the profile with the entire user-population, a service that was annotated by the user as being demanding etc.

The on-line (real-time) modification of QoS settings can be transparent to the user or the user can be involved whether he agrees to increase, e.g., his bandwidth, temporarily (and possibly pay accordingly). The precise mode of operation can be chosen by the operator business model.

The invention applies in various network access scenarios.

**Scenario 1: User experience & price.** Apart from the obvious broadband services (internet access, gaming networks, VolP, ...), the user subscribes to a comfort service: that promises the user the optimal bandwidth when needed. That is an optimization based on experience and cost, while reducing the QoS demand when not necessary and thus reducing price. The operator's pricing strategy can still be both flat-fee as pay-per-bit.

**Scenario 2: Pro-actively upon sequence in service scenario**. A system using the proposed technology can recognize the click-stream preceding a demand for high-bandwidth, e.g., the user daily browses through the same web-page to retrieve his daily news video broadcast. Even just before he asks the video, his bandwidth will be upgraded such that at the start of the video, no delay is perceived. For the user, the experience will be exactly the same as with a very expensive gold subscription and the operator can be sure that after the video finishes, the bandwidth becomes available again.

**Scenario 3: Service selection applications**. Even when not surfing the web and thus not interacting with any network element or server-side software, the local click-stream can detect that the user is about to start a demanding application, e.g., an online game, ftp, net-meeting, etc. With this context knowledge it is possible to increase service selection prediction accuracy can be increased. The proposed click-stream-based technology is used to enable an on service select QoS change scenario, when the world of off-line applications suddenly needs internet connectivity.

**Scenario 4: Compare user-profile with the entire user-population.** Such a comparison might reveal that other users with similar profiles demand a guaranteed bandwidth when accessing a certain page, e.g. sports video's, online financial transactions, etc. The system will or can (propose to) upgrade the user experience accordingly, e.g., by even sharing network resources in the case of sports video by broadcasting.

**Scenario 5: Preferences: annotate a service as requiring a high bandwidth:** A system using the proposed technology can present the user with an 'increase user experience' button that marks this service as a demanding service. The user profile and preferences will be updated and the next time, the QoS will be modified even before the user starts the service.

The observing and scheduling method might comprising the following procedures . All users are observed in their use of applications and services with respect to the QoS preferences. Demands are send real-time to a central QoS scheduler or retrieved in batch mode from the logs at user side. From this behavior information orthogonal axis are synthesized in the QoS scheduler. These axis are used for definition of the input channels of a predicting component, e.g., a neural network. The neural network will be trained with the received data from the users and then installed at the user-side by the QoS scheduler.

The scheduler might work according to the following rule-chain. The error-rate is measured (prediction versus user correction) and collected through the network by the QoS scheduler for all users. The profiles of the neural networks are corrected (batch processing) through an update over the network by the QoS scheduler.

The preferences might for example comprising the following strategies each defining a granularity of scheduling
- **User demand** might be an optimization that promises the user the optimal bandwidth when needed, while reducing the QoS demand when not necessary.
- **Pro-actively** might use the event stream to predict a demand.
- **User-profile and user-population** might perform a comparison revealing that other users with similar profiles demand a guaranteed bandwidth when accessing a certain. The system will/can upgrade the user experience accordingly.
- **Static preferences** might defining a service as requiring a high QoS. The user has a preference annotate dialog for marking a service demanding certain QoS.

### Alternative Embodiments

For example, the invention can be used in a collaborative distributed environment. That means the scheduler functionality as well as the client functionality and network element functionality might be realized as a distributed system. For the readers convenience the decomposition is described in a hardware centric fashion binding functionality to network nodes, i.e., hardware entities. It might be preferable to enhance certain network management components or even to distribute components over the network as mobile agents. The shown architecture is for illustrating purposes, only.

## Claims

1. A Method for allocating network resources by just-in-time modulation of quality of service, QoS comprising steps of
- recording QoS demands (16),
- predicting required QoS demands,
- evaluating QoS demands (16) and balancing QoS grants for deriving and propagating QoS grants (14),
- deriving and propagating QoS demands (16) and grants (14), and
- coordinating QoS demands (16) of a manifold of users,
**characterized by** further comprising the steps of
- recording a click-stream preceding a demand for bandwidth at a client terminal of a user as user-behavior that triggers the real-time adaptation or modulation of the QoS settings (15) at a terminal,
- generating QoS user profile (13) comprising an event log reflecting resource requests and a synthesis of user-behavior at the terminal,
- predicting required QoS demand (16) based on current user behavior and QoS user profile (13) by a trained predicting component minimizing the prediction versus user correction error-rate at the terminal, and
- coordinating QoS demands (16) of a manifold of users, based on predicted and required QoS demand (16), QoS user profiles (13), QoS user preferences (11), and available resources (15) by a scheduling server.

2. The method according to claim 1, **characterized in that** the recording, predicting, deriving and propagating, and coordinating are performed with respect to defined QoS user preferences (11).

3. The method according to claim 1, **characterized in that** said QoS user preferences (11) specify a QoS demanding strategy, defining a contingency plan describing what QoS demands (11) should be made under which circumstances.

4. The method according to claim 1, **characterized in that** the prediction is realized by a neuronal network.

5. A telecommunication network comprising a client terminal and a scheduler server, said client terminal comprising
- recording means for recording quality of service, QoS demands (16),
- predicting means for predicting required QoS demands (16),
- requesting means for deriving and propagating QoS grants (14), and said scheduler server comprising
- evaluation and balancing means for evaluating QoS demands (16) and balancing QoS grants for deriving and propagating QoS grants (14), and
- coordinating means for coordinating QoS demands (16) of a manifold of users,
**characterized in that** the client terminal comprises further
- recording means for recording a click stream preceding a demand for bandwidth at a client terminal of a user as user-behavior that triggers the real-time adaptation or modulation of the QoS settings (15),
- processing means for generating QoS user profile (13) comprising an event log reflecting resource requests and a synthesis of user-behavior,
- prediction means for predicting (8, 10) required QoS demand based on current user behavior and QoS user profile (13) by a trained predicting component minimizing the prediction versus user correction error-rate, and the scheduler server comprises further
- coordinating means for coordinating QoS demands (16) of a manifold of users, based on predicted and required QoS demand (16), QoS user profiles (13), QoS user preferences (11), and available resources (15).

6. A client terminal comprising
- recording means for recording quality of service, QoS demands,
- predicting means for predicting required QoS demands,
- requesting means for deriving and propagating QoS grants, and
**characterized in that** the client terminal comprises further
- recording means for recording a click stream preceding a demand for bandwith at the client terminal as user-behavior that triggers the real-time adaptation or modulation of the QoS settings (15),
- processing means for generating QoS user profile (13) comprising an event log reflecting resource requests and a synthesis of user-behavior,
- prediction means for predicting required QoS demand (16) based on current user behavior and QoS user profile (13) by a trained predicting component minimizing the prediction versus user correction error-rate.

7. The client terminal according to claim 6, **characterized in that** the client terminal comprises further communication means for providing the QoS user profiles (13) to a scheduler server.

8. A computer software product for allocating network resources by just-in-time modulation of quality of service, which upon execution performs the method according to claim 1.

## Patentansprüche

1. Verfahren zum Zuteilen von Netzressourcen durch Just-in-Time-Modulation von Dienstgüte, QoS, welches folgende Schritte umfasst:
- Registrieren von QoS-Bedarf (16),
- Vorhersagen von QoS-Bedarf,
- Auswerten von QoS-Bedarf (16) und Abgleichen von QoS-Zuweisungen zum Ableiten und Weitergeben von QoS-Zuweisungen (14),
- Ableiten und Weitergeben von QoS-Bedarf (16) und QoS-Zuweisungen (14), und
- Koordinieren des QoS-Bedarfs (16) einer Vielzahl von Benutzern,
**gekennzeichnet durch** folgende weitere Schritte:
- Registrieren eines einer Bandbreitenanforderung vorausgehenden Click-Stroms in einem Client-Endgerät eines Benutzers als Benutzerverhalten, welches die Echtzeitanpassung oder Modulation der QoS-Einstellungen (15) in einem Endgerät auslöst,
- Erzeugen eines QoS-Benutzerprofils (13) im Endgerät, welches eine Ereignisprotokoll umfasst, das Ressourcenanforderungen und eine Synthese des Benutzerverhaltens enthält,
- Vorhersagen von QoS-Bedarf (16) auf der Basis des aktuellen Benutzerverhaltens und des QoS-Benutzerprofils (13) **durch** eine trainierte Vorhersagekomponente im Endgerät, welche die Vorhersage/Benutzerkorrektur-Fehlerrate minimiert, und
- Koordinieren von QoS-Bedarf (16) einer Vielzahl von Benutzern auf der Basis von vorhergesagtem QoS-Bedarf (16), QoS-Benutzerprofilen (13), QoS-Benutzerpräferenzen (11) und zur Verfügung stehenden Ressourcen (15) **durch** einen Scheduling-Server.

2. Verfahren nach Anspruch 1, **dadurch gekennzeichnet, dass** die Registrierung, Vorhersage, Ableitung und Weitergabe und die Koordinierung in Bezug auf definierte QoS-Benutzerpräferenzen (11) durchgeführt werden.

3. Verfahren nach Anspruch 1, **dadurch gekennzeichnet, dass** die QoS-Benutzerpräferenzen (11) eine QoS-Bedarfsstrategie angeben, die einen Notplan definiert, der beschreibt, welcher QoS-Bedarf (16) unter welchen Umständen geltend gemacht werden sollte.

4. Verfahren nach Anspruch 1, **dadurch gekennzeichnet**, das die Vorhersage durch ein neuronales Netz realisiert wird.

5. Telekommunikationsnetz mit einem Client-Endgerät und einem Scheduler-Server, wobei das Client-Endgerät umfasst:
- Registriermittel zum Registrieren von Dienstgüte, QoS-Bedarf (16),
- Vorhersagemittel zum Vorhersagen von QoS-Bedarf (16),
- Mittel zum Ableiten und Weitergeben von QoS-Zuweisungen (14),
und wobei der Scheduler-Server umfasst:
- Auswerte- und Abgleichmittel zum Auswerten von QoS-Bedarf (16) und Abgleichen von QoS-Zuweisungen zum Ableiten und Weitergeben von QoS-Zuweisungen (14), und
- Koordinierungsmittel zum Koordinieren des QoS-Bedarfs (16) einer Vielzahl von Benutzern,
**dadurch gekennzeichnet, dass** das Client-Endgerät ferner umfasst:
- Registriermittel zum Registrieren eines einer Bandbreitenanforderung vorausgehenden Click-Stroms in einem Client-Endgerät eines Benutzers als Benutzerverhalten, welches die Echtzeitanpassung oder Modulation der QoS-Einstellungen (15) auslöst,
- Verarbeitungsmittel zum Erzeugen eines QoS-Benutzerprofils (13), welches ein Ereignisprotokoll umfasst, das Ressourcenanforderungen und eine Synthese des Benutzerverhaltens enthält,
- Vorhersagemittel zum Vorhersagen (8, 10) von QoS-Bedarf auf der Basis des aktuellen Benutzerverhaltens und des Benutzerprofils (13) durch eine trainierte Vorhersagekomponente, welche die Vorhersage/Benutzerkorrektur-Fehlerrate minimiert,
und dass der Scheduler-Server ferner umfasst:
- Koordinierungsmittel zum Koordinieren von QoS-Bedarf (16) einer Vielzahl von Benutzern auf der Basis von vorhergesagtem QoS-Bedarf (16), QoS-Benutzerprofilen (13), QoS-Benutzerpräferenzen (11) und zur Verfügung stehenden Ressourcen (15).

6. Client-Endgerät, welches umfasst:
- Registriermittel zum Registrieren von Dienstgüte, QoS-Bedarf,
- Vorhersagemittel zum Vorhersagen von QoS-Bedarf,
- Mittel zum Ableiten und Weitergeben von QoS-Zuweisungen,
**dadurch gekennzeichnet, dass** es ferner umfasst:
- Registriermittel zum Registrieren eines einer Bandbreitenanforderung vorausgehenden Click-Stroms am Client-Endgerät als Benutzerverhalten, welches die Echtzeitanpassung oder Modulation der QoS-Einstellungen (15) auslöst,
- Verarbeitungsmittel zum Erzeugen eines Benutzerprofils (13), welches ein Ereignisprotokoll umfasst, das Ressourcenanforderungen und eines Synthese des Benutzerverhaltens enthält,
- Vorhersagemittel zum Vorhersagen von QoS-Bedarf (16) auf der Basis des aktuellen Benutzerverhaltens und des Benutzerprofils (13) durch eine trainierte Vorhersagekomponente, welche die Vorhersage/Benutzerkorrektur-Fehlerrate minimiert.

7. Client-Endgerät nach Anspruch 6, **dadurch gekennzeichnet, dass** es ferner Kommunikationsmittel zur Übermittlung der QoS-Benutzerprofile (13) an einen Scheduler-Server umfasst.

8. Computersoftware-Produkt zum Zuteilen von Netzressourcen durch Just-in-Time-Modulation von Dienstgüte, das bei seinem Ablauf das Verfahren nach Anspruch 1 durchführt.

## Revendications

1. Procédé pour affecter des ressources réseau par une modulation juste-à-temps de la qualité de service, QoS, comprenant les étapes consistant à :
- enregistrer les demandes de QoS (16),
- prévoir les demandes de QoS requises,
- évaluer les demandes de QoS (16) et équilibrer les affectations de QoS pour dériver et propager les affections de QoS (14),
- dérivé et propager les demandes de QoS (16) et les affectations (14), et
- coordonner les demandes de QoS (16) d'un grand nombre d'utilisateurs,
**caractérisé en ce qu'**il comprend, en outre, les étapes consistant à :
- enregistrer un flot de clics précédant une demande de bande passante sur un terminal client d'un utilisateur comme comportement d'un utilisateur qui déclenche l'adaptation ou la modulation en temps réel des paramètres de la QoS (15) sur un terminal,
- générer un profil d'utilisateur de QoS (13) comprenant un journal d'évènements reflétant les requêtes de ressource et une synthèse du comportement de l'utilisateur sur le terminal,
- prévoir la demande de QoS requise (16) sur la base du comportement actuel de l'utilisateur et le profil de l'utilisateur de la QoS (13) par un composant de prévision éprouvé en minimisant la prédiction par rapport au taux d'erreur de correction de l'utilisateur sur le terminal, et
- coordonner les demandes de QoS (16) d'un grand nombre d'utilisateurs, sur la base des demandes de QoS prédites et requises (16), les profils d'utilisateur de la QoS (13), les préférences d'utilisateur de la QoS (11) et les ressources disponibles (15) par un serveur de programmation.

2. Procédé selon la revendication 1, **caractérisé en ce que** l'enregistrement, la prévision, la dérivation et la propagation, et la coordination sont effectuées par rapport aux préférences de l'utilisateur de la QoS définies (11).

3. Procédé selon la revendication 1, **caractérisé en ce que** lesdites préférences de l'utilisateur de la QoS (11) spécifient une stratégie exigeante de QoS, définissant un plan de contingence décrivant quelles demandes de QoS (11) doivent être effectuées dans quelles circonstances.

4. Procédé selon la revendication 1, **caractérisé en ce que** la prévision est réalisée par un réseau de neurones.

5. Réseau de télécommunication comprend un terminal client et un serveur de programmation, ledit terminal client comprenant :
- un moyen d'enregistrement pour enregistrer les demandes de qualité de service, QoS (16),
- un moyen de prévision pour prévoir les demandes de QoS requises (16),
- un moyen de requête pour dériver et propager les affectations de QoS (14) et
ledit serveur de programmation comprenant
- un moyen d'évaluation et d'équilibrage pour évaluer les demandes QoS (16) et équilibrer les affectations de QoS pour dériver et propager les affectations de QoS (14),
- un moyen de coordination pour coordonner les demandes QoS (16) d'un grand nombre d'utilisateurs,
**caractérisé en ce que** le terminal client comprend en outre
- un moyen d'enregistrement pour enregistrer un flot de clics précédant une demande de bande passante sur un terminal client d'un utilisateur comme comportement de l'utilisateur qui déclenche l'adaptation ou la modulation en temps réel des paramètres de QoS (15),
- un moyen de traitement pour générer le profil d'utilisateur de QoS (13) comprenant un journal d'évènements reflétant les requêtes de ressource et une synthèse du comportement de l'utilisateur,
- un moyen de prévision pour prévoir (8, 10) la demande de QoS requise sur la base du comportement actuel de l'utilisateur et du profil de l'utilisateur de QoS (13) par un composant de prévision éprouvé minimisant la prévision par rapport au taux d'erreur de correction de l'utilisateur et
le serveur de programmation comprend en outre
- un moyen de coordination pour coordonner les demandes QoS (16) d'un grand nombre d'utilisateurs, basé sur la demande de QoS prédite et requise (16), les profils d'utilisateur de la QoS (13), les préférences d'utilisateur de la QoS (11) et les ressources disponibles (15).

6. Terminal client comprenant
- un moyen d'enregistrement pour enregistrer les demandes de qualité de service, QoS,
- un moyen de prévision pour prévoir les demandes de QoS requises,
- un moyen de requête pour dériver et propager les affectations de QoS et
**caractérisé en ce que** le terminal client comprend, en outre,
- un moyen d'enregistrement pour enregistrer un flot de clics précédant une demande de bande passante à un terminal client comme comportement de l'utilisateur qui déclenche l'adaptation ou la modulation en temps réel des paramètres de QoS (15),
- un moyen de traitement pour générer le profil d'utilisateur de QoS (13) comprenant un journal d'évènements reflétant les requêtes de ressource et une synthèse du comportement de l'utilisateur,
- un moyen de prévision pour prévoir la demande de QoS requise (16) sur la base du comportement actuel de l'utilisateur et le profil de l'utilisateur de QoS (13) par un composant de prévision éprouvé minimisant la prévision par rapport au taux d'erreur de correction de l'utilisateur.

7. Terminal client selon la revendication 7, **caractérisé en ce que** le terminal client comprend, en outre, un moyen de communication pour fournir les profils d'utilisateur de la QoS (13) à un serveur de programmation.

8. Produit logiciel informatique pour affecter des ressources réseau par une modulation juste-à-temps de la qualité de service, qui, lors de son exécution effectue le procédé selon la revendication 1.
